# EUROPEAN PATENT APPLICATION

(11) **EP 4 818 940 A1**
(43) Date of publication of application: **07.10.2026**
(21) Application number: 25183328.1
(22) Date of filing: 17.06.2025
(51) Int. Cl.: G06F 21/53, G06F 9/455, G06F 21/79

(54) **SYSTEM AND METHOD FOR ESTABLISHING TRUST BETWEEN A VIRTUAL MACHINE AND A PHYSICAL DEVICE**

(30) Priority: 03.04.2025 IN 202541032948
(71) Applicant: NXP B.V., 5656 AG Eindhoven (NL)
(72) Inventor: Sethi, Varun, 5656AG Eindhoven (NL)
(74) Representative: Schwarzweller, Thomas

(57) **Abstract**

A system comprises: at least one processor core (110) supporting a virtual machine (120); an interface (150) configured for communication between the processor core (110) and a memory (160); a resource domain controller, RDC (130), configured to control access to the memory (160); and a secure enclave (140); wherein the resource domain controller, RDC (130), is configured by the secure enclave (140). A method for controlling access to a memory (160) and/or a device (170) assigned to a virtual machine (120) comprises: allocating, by a secure enclave (140), at least one memory region of the memory (160) to the virtual machine (120); assigning, by the secure enclave (140), a domain identifier to a processor core (110) supporting the virtual machine (120) and/or the device (170); and providing to the resource domain controller (130), by the secure enclave (140), the domain identifier and information identifying said at least one memory region allocated to the virtual machine (120).

## Description

### FIELD

The present disclosure relates to a system and method. Particularly, but not exclusively, the disclosure relates to a computer-implemented system and method. Further particularly, but not exclusively, the present disclosure relates to a system and method for establishing trust between a virtual machine and a physical device.

### BACKGROUND

Direct assigned devices cannot access private memory associated with a secure confidential virtual machine (VM). As a result, devices can only have DMA (direct memory access) to a shared memory region, from which a separate memory copy needs to be made to the VM private memory. This increases latency and/or requires additional resources.

### SUMMARY

Features of the invention are set out in the appended claims.

According to a first aspect, there is provided a system comprising: at least one processor core supporting a virtual machine; an interface configured for communication between the processor core and a memory; a resource domain controller, RDC, configured to control access to the memory; and a secure enclave; wherein the resource domain controller, RDC, is configured by the secure enclave.

By configuring (e.g., programming) the resource domain controller, the secure enclave sets or controls access permissions for access to the memory in a secure manner. Accordingly, the system may ensure that only the virtual machine, or a device directly assigned to the virtual machine, can access memory regions allocated or associated with that virtual machine, including device memory mapped registers. That is, DMA access is associated with a particular virtual machine, so that when an I/O device is assigned to a particular virtual machine, it can only access the memory assigned to that virtual machine. This may help to prevent malicious attempts by a hypervisor, another virtual machine or another untrusted entity, to obtain access to the virtual machine memory or to an I/O device assigned to the virtual machine

The system and method of the present disclosure may thereby establish trust between a secure virtual machine and a physical device assigned to it, via the secure enclave. Trust is required for allowing the device to directly access virtual machine memory. This may also require that only the specific virtual machine should have access to the device.

Optionally, the secure enclave is configured to provide information identifying at least one memory region associated with the virtual machine to the resource domain controller, the memory region being comprised in said memory.

Optionally, the memory region is allocated to the virtual machine by the secure enclave.

Optionally, the secure enclave is configured to obtain, from the at least one processor core, a virtual machine identifier for the virtual machine.

Optionally, the secure enclave is configured to assign a domain identifier to the processor core supporting the virtual machine.

Optionally, the secure enclave is configured to provide the domain identifier of the processor core, together with an indication of a memory region allocated to the virtual machine, to the resource domain controller for controlling access to the memory.

Optionally, the domain identifier is based at least in part on a core identifier associated with the at least one processor core.

Optionally, the interface is further configured for communication between the processor core and a device assigned to the virtual machine.

Optionally, the secure enclave is further configured to assign a domain identifier to the device. The secure enclave may be further configured to provide the domain identifier of the device to the resource domain controller for controlling access from the device to the memory.

Optionally, the resource domain controller (RDC) is further configured to control access to the device; and the secure enclave is configured to provide the domain identifier of the processor core, together with an indication of a memory block of the device, to the resource domain controller for controlling access to the device. In particular, the resource domain controller may control access to the device such that only the virtual machine to which the device is assigned can access the device memory.

Optionally, the resource domain controller (RDC) comprises at least one domain assignment controller (DAC), configured to append the domain identifier of the processor core to an access request originating from the processor core and/or to append the domain identifier of the device to an access request originating from the device.

Optionally, the resource domain controller comprises a memory region checker (MRC) configured to allow access to the memory, in response to an access request, based on a domain identifier and a memory region specified in the access request. The access request may originate from the processor core (e.g., from the virtual machine or from another virtual machine supported by the processor core) or from the device.

Optionally, the resource domain controller comprises a memory block checker (MBC) configured to allow access to the device, in response to an access request, based on a domain identifier and a memory block specified in an access request. The access request may originate from the processor core (e.g., from the virtual machine or from another virtual machine supported by the processor core).

Optionally, the at least one processor core further comprises: a hypervisor for initialising and managing the virtual machine on the processor core; and a BootROM extension. The BootROM extension may act as a hypervisor monitor, which takes control of hypervisor privileged operations thus establishing a confidential compute environment on the core. The BootROM extension may be configured to redirect translation table setup for the virtual machine from the hypervisor to the BootROM extension via a stub.

Optionally, the BootROM extension performs translation table setup in response to validation of the virtual machine identifier and associated memory region details by the secure enclave.

Optionally, the system comprises a system-on-chip (SoC), wherein the system-on-chip comprises the at least one processor core and the secure enclave. The system-on-chip may further comprise the resource domain controller.

Optionally, the system further comprises the memory and/or the device.

According to a second aspect, there is provided a method for controlling access to a memory and/or a device assigned to a virtual machine, wherein the virtual machine is hosted by a system comprising at least one processor core supporting the virtual machine, a resource domain controller, a secure enclave, a memory and a device. The method may comprise configuring, by the secure enclave, the resource domain controller.

Optionally, the method may comprise allocating, by the secure enclave, at least one memory region of the memory to the virtual machine. The method may comprise assigning, by the secure enclave, a domain identifier to a processor core supporting the virtual machine and/or the device. The method may comprise providing to the resource domain controller, by the secure enclave, the domain identifier and information identifying said at least one memory region allocated to the virtual machine.

Optionally, the method further comprises controlling, by the resource domain controller, access to the memory and/or the device based on the domain identifier.

Optionally, the method further comprises assigning, by the secure enclave, a domain identifier to the device. The method may comprise providing to the resource domain controller, by the secure enclave, the domain identifier and information identifying said at least one memory region allocated to the virtual machine. The method may comprise controlling, by the resource domain controller, access to the memory and/or the device based on the domain identifier.

Optionally, the method further comprises appending, by the resource domain controller, the domain identifier of the processor core to an access request originating from the at least one processor core and/or appending the domain identifier of the device to an access request originating from the device.

Optionally, the method further comprises allowing access to the memory in response to an access request, based on a domain identifier and a memory region specified in the access request.

Optionally, the method further comprises allowing access to the device in response to an access request, based on a domain identifier and a memory block specified in the access request.

According to a third aspect, there is provided a non-transitory computer readable storage medium comprising instructions that, when executed by a processing device, cause the processing device to perform the method according to the second aspect of the disclosure.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
Figure 1 illustrates a system according to a first embodiment of the present disclosure;
Figure 2 illustrates a process for instantiating a secure confidential virtual machine (VM) on the system of Figure 1 according to an embodiment of the present disclosure; and
Figure 3 illustrates operation of the system of Figure 1 to control memory access during runtime of a virtual machine supported by the system.

### DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

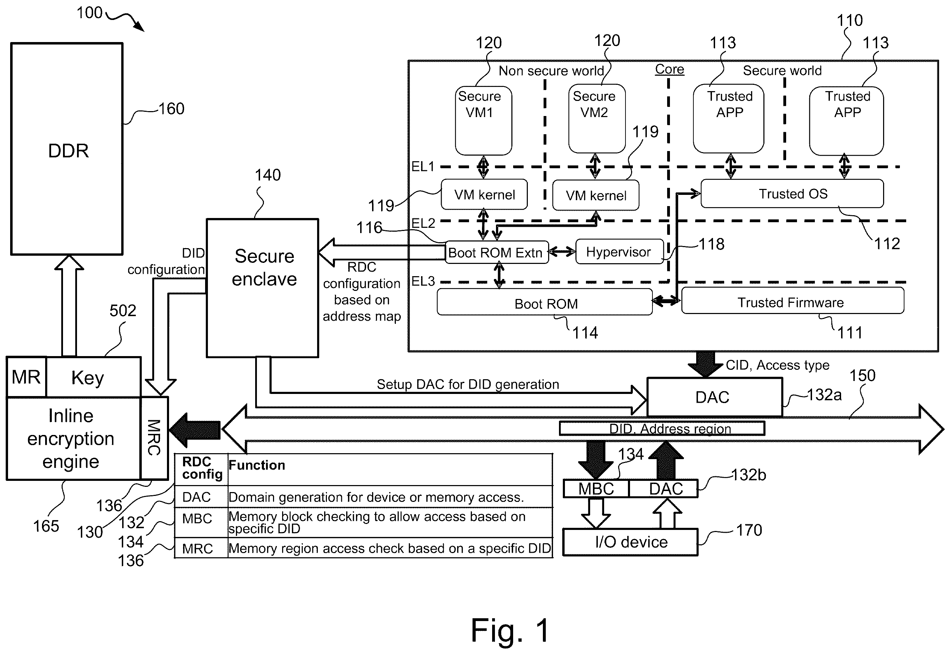

Figure 1 illustrates a system 100 according to an embodiment of the present disclosure, in the form of a confidential computing system. The system 100 includes at least one processor 110 supporting one or more virtual machines (VM1, VM2) 120, a resource domain controller (RDC) 130; and a secure enclave 140. The system further includes an interface 150 (for example, a bus or interconnect) for communicating with a memory 160, an inline encryption engine (IEE) 165 for encrypting all data sent to the memory 160, and an I/O device 170. The system 100 may be implemented as a system on chip (SoC).

In this embodiment, the processor 110 is implemented as a core cluster 110. As an example, the processor 110 may be implemented by an ARM^{®} v8 core. The processor core 110 includes trusted firmware 111, and a trusted operating system (OS) 112 supporting trusted apps 113. The processor core 110 also includes a Boot ROM 114, a BootROM Extension 116, a hypervisor 118, and VM kernels 119 for supporting respective VMs 120. Figure 1 illustrates two virtual machines 120 supported by the processor core 110. However, the skilled person will appreciate that, in other embodiments, one virtual machine or more than two virtual machines may be supported by the processor core 110.

The BootROM 114 and BootROM Extension 116 may be implemented as firmware on the core 110. The BootROM 114 controls execution of the trusted firmware 111 and has complete control over the EL3 (Exception Level 3) privilege level. The BootROM is active at system run time, traps exceptions and forwards them to the trusted firmware 111 as required.

The BootROM Extension 116 and the hypervisor 118 run at Exception Level 2 (EL2), where the BootROM extension takes control of hypervisor privilege operations thus providing a confidential compute environment on the core. BootROM extension achieves this by binary translating the EL2 privilege register access instructions in the hypervisor code. The BootROM extension is authenticated and instantiated by the BootROM dynamically, on detecting the instantiation of the hypervisor. The BootROM Extension 116 handles VMID (virtual machine identifier) setup, EL2 exception handling, stage 2 page table configuration, and VM state save.

Each virtual machine 120 supported by the core 110 may be associated with a respective memory region of a memory 160. As an example, the memory 160 may be provided in the form of a DDR and may be accessed via the interface 150.

An I/O device 170 may be directly assigned to the VM 120 and may be accessed via the interface 150.

The resource domain controller (RDC) 130 is responsible for controlling access to the memory 160 by the virtual machines 120 and any assigned device 170, and for controlling access to memory-mapped registers of any assigned devices by the virtual machines (VM) 120. The RDC 130 comprises a domain assignment controller (DAC) 132, 132a, 132b, a memory block checker (MBC) 134 and a memory region checker (MRC) 134. In this embodiment, there are multiple DAC registers 132a, 132b in the RDC 130, each associated with a different master (i.e., DAC 132a is associated with the core 110, DAC132b is associated with the I/O device 170).

The secure enclave 140 is the main trusted entity in the system 100. It may be implemented by firmware on a secure subsystem (including, e.g., a processor, ROM storing the secure enclave firmware, and RAM) isolated from the main processor core 110. As an example, it may be implemented by NXP's Edgelock ^{®} secure enclave. According to the present disclosure, the secure enclave 140 is responsible for configuring the RDC 130 to control device access to VM memory and VM access to the device. In this way, the secure enclave is used to establish trust between the device and the secure VM, so that direct memory access (DMA) may be allowed between the device and the VM memory and device access may be allowed from the virtual machine. Configuration of the RDC by the secure enclave 140 may protect VM data from malicious attacks by non-trusted entities

The secure enclave 140 communicates with the BootROM extension 116 on the core 110. The BootROM 114 and BootROM extension 116 may be instantiated and/or authenticated by the secure enclave 140. This establishes a chain of trust between the secure enclave 140 and the BootROM 114 and BootROM extension 116. The secure enclave 140 is the root of trust, with trust flowing from the secure enclave 140 to the BootROM and from the BootROM 114 to the BootROM extension 116.

The BootROM 114 is a trusted entity at the EL3 privilege level (MMU and exceptions). The BootROM 114 authenticates and loads the BootROM extension 116 at the EL2 level and is part of the root of trust. The secure enclave 140 is the root of trust and authenticates and loads the BootROM 114.

The BootROM extension 116 controls execution of the hypervisor 118 to prevent the non-trusted hypervisor 118 from accessing the VM memory or VM state. To achieve this, the BootROM extension 116 takes control of the memory management unit (MMU) and exception vectors from the hypervisor 118 at the EL2 privilege level. In one embodiment, the BootROM extension 116 does this by binary translating instructions from the hypervisor 118 that are accessing the higher privilege system registers at the EL2 privilege level, so that instructions to access higher privilege system registers are routed via the BootROM extension. The BootROM extension 116 also handles exceptions, and may forward exceptions to the hypervisor 118 as required.

Memory partitioning and protection for the virtual machine 120 is configured by the secure enclave 140, which interacts with the BootROM extension 116 and uses the RDC 130 for isolating the DMA transactions. This ensures that DMA access by a particular VM 120 is restricted to a private memory area associated with that VM, so that an I/O device assigned to a particular VM can only access the memory region assigned to that VM. By controlling access to the memory 160 by the core 110 and the I/O devices, unauthorised access (for example, by the hypervisor 118 or another non-trusted entity) may be prevented.

Trusted device access and DMA configuration is also controlled by the secure enclave 140 using the RDC 130. This ensures that, when an I/O device 170 is assigned to a particular VM, i.e., to create memory-mapped access to the device, the device 170 is isolated so that it is not accessible by any other entity.

As discussed above, the secure enclave 140 configures the RDC 130 for controlling access to the memory 160 by the core 110 and the I/O devices, and access to memory-mapped registers of the I/O device by the virtual machines (VM) 120. The RDC 130 comprises the DAC 132, 132a, 132b, MBC 134 and MRC 136. The DAC 132a is configured by the secure enclave 140 to generate sets of domain IDs (DIDs) associated with the core cluster 110 where the VM execution threads are executed. The secure enclave 140 is configured to assign a domain identifier to the or each processor core 110 supporting the virtual machine 120. The secure enclave 140 also assigns a domain identifier to each device 170 assigned to the virtual machine 120. These DIDs are programmed into the DAC 132a by the secure enclave 140. In some embodiments, the RDC 130 generates DIDs based on the combination of the master domain identifier setup by the secure enclave 140 in the DAC 132a and a core cluster identifier (CID). As an example, the CID be output as a sideband signal from the core 110. The VMIDs are obtained by the secure enclave 140 from the BootROM Extension 116. There may be one or more VMIDs associated with a particular core cluster 110. In the MRC, the memory region allocated to a particular virtual machine is associated with the DIDs for all core clusters executing the virtual machine and with the DIDs for any devices assigned to the virtual machine.

The memory block checker (MBC) 134 is configured to restrict access to device memory mapped registers to a particular VM 120. Access to memory mapped registers of the device 170 is controlled by the MBC 134 based on the DID.

The memory region checker (MRC) 136 is configured to restrict access to memory regions of the memory 160 (e.g. DDR) to a particular VM 120.

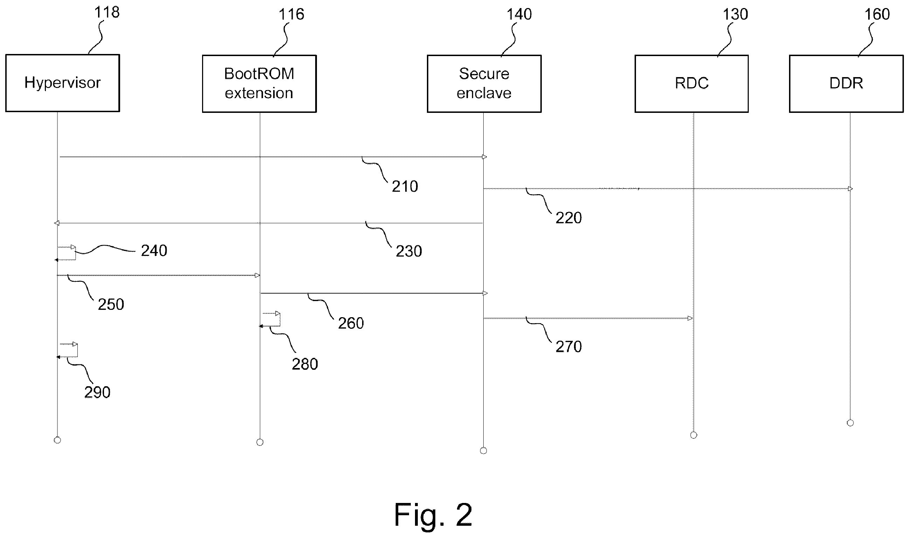

Figure 2 illustrates a process 200 for instantiating a secure confidential virtual machine (VM) 120 on the system 100 according to an embodiment of the present disclosure.

In a step 210 the hypervisor 118 sends the encrypted VM image and configuration to the secure enclave 140. It is known to encrypt the VM image when it is deployed in a confidential computing scenario, and the skilled person would be familiar with techniques for provisioning the encryption key to the secure enclave 140.

In a step 220 the secure enclave 140 decrypts the VM image and copies the VM image to the DDR memory 160. When copying the VM image to the DDR memory 160, the VM image will be encrypted by the inline encryption engine (IEE) 165 using a (new) IEE key 166 which is programmed by the secure enclave 140. Note that any data sent to the DDR 160 will also be encrypted with this new IEE key 166. Inline encryption protects the VM memory from physical attack, since the DDR 160 may be provided externally to the System on Chip (SoC).

In a step 230, the secure enclave 140 responds to the hypervisor 118 by sending details of the VMID and memory region setup to the hypervisor 118. That is, the secure enclave 140 informs the hypervisor 118 of the VMID associated with the virtual machine 120, together with the address region where the VM memory has been loaded.

In a step 240, the hypervisor 118 attempts to initialize the VM 120 and set up the stage 2 translation tables. (When the virtual machine is executing, it has only a notional address for the address space, while the actual physical address space is controlled by the hypervisor 118 by virtue of the stage 2 translation tables.) However, since the BootROM extension 116 binary translated the instructions accessing the EL2 privilege system registers in the hypervisor, whenever the hypervisor tries to access that register it will execute a stub that will take it to the BootROM extension 116. In this case, the hypervisor 116 is attempting to set the VTTBR (virtualization translation table base register), which holds the base address and VMID for the stage 2 translation table. Therefore, in a step 250, the VTTBR access request (including the VMID and associated memory region details) is directed to the BootROM extension 116 via a stub patched via binary translation by the BootROM extension 116.

In a step 260, the BootROM extension 116 sends a validation request to the secure enclave 140 to validate the VMID and memory region details. This validation step ensures that the hypervisor 118 is not attempting to assign this memory region to a different virtual machine.

In a step 270, the secure enclave 140, in response to successfully validating the VMID and memory region details to the BootROM extension 116, configures the RDC 130. In particular, the secure enclave 140 sets up the RDC memory regions in the MBC 134 and MRC 136. The secure enclave 140 also sets up the DIDs for each memory region. That is, the MBC and MRC each store a table associating each memory region or memory block with one or more DIDs for which access to that memory region or memory block is permitted.

In a step 280, the BootROM extension 116, in response to validation of the VMID and memory region details by the secure enclave 140, sets up the stage 2 translation tables (i.e., VTTBR setup). This is performed by the BootROM extension 116, because the BootROM extension 116 does not allow the hypervisor 116 to access this register.

In a step 290, the hypervisor 118 (now under the impression that it has set up the stage 2 translation tables) completes instantiation of the virtual machine 120. Although not shown in Figure 2, if the validation of the VMID and memory region details at step 260 fails, the virtual machine is not instantiated.

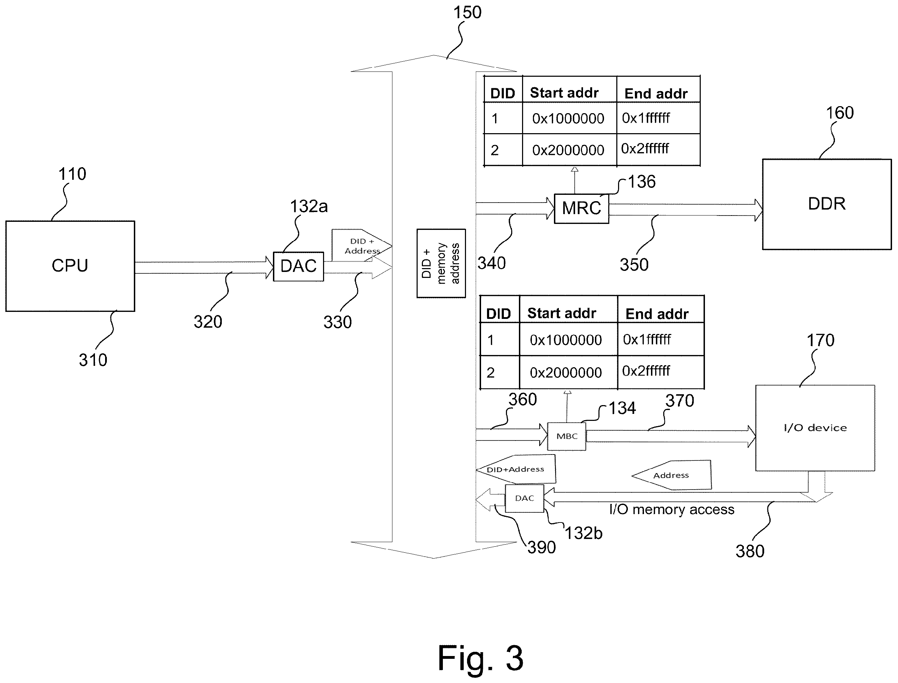

Figure 3 illustrates operation of the RDC to control memory and device access during runtime of the virtual machine 120.

As indicated by reference 310, when an address access request originates in the core 110, address translation is performed by the core 110, by the stage 2 translation tables (VTTBR). If the address translation fails, there will be an exception to the BootROM extension 116 and the requested access will not be allowed. For example, if a particular VM attempts to access an address region that is not associated with that VM in the translation table, the translation will fail.

Following successful address translation, the address access request originating from the core 110 is output to the DAC 132a of the RDC 130 as indicated by the arrow 320.

As indicated by reference 330, the DAC 132a associates at least one domain identifier (DID) with the memory address, and forwards the DID and memory address to the interconnect 150.

If the access request is for the memory (DDR) 160, it is passed to the MRC 136 as indicated by the arrow 340. The MRC 136 checks whether the memory address is associated with a memory region that is enabled in the MRC, and then whether the DID is associated with that memory region in the MRC.

On successful validation by the MRC 136, the transaction is forwarded to the memory (DDR) 160, as indicated by arrow 350. If validation by the MRC 136 fails, access to the memory (DDR) 160 is not allowed.

If the access request is for a memory mapped register of the I/O device 170, it is passed to the MBC 134 as indicated by the arrow 360. The MBC 134 checks whether the memory address is associated with a memory block that is enabled in the MBC 134, and whether the DID is associated with that memory block in the MBC 134.

On successful validation by the MBC 134, the transaction is forwarded to the I/O device 170, as indicated by arrow 370. If validation by the MBC 136 fails, access to the device 170 is not allowed.

Similarly, DMA transactions originating from the I/O device 170 are output from the I/O device 170 to the DAC 132b, as indicated by arrow 380. The DAC 132b appends a DID to the address and floats the DID and address onto the interconnect 150 as indicated by arrow 390. These transactions will be handled by the MRC 136 in the same manner as described above.

In the foregoing description, a system 100 and method 200, 300 have been described according to embodiments of the present disclosure. In particular, a system 100 has been disclosed, the system 100 comprising at least one processor core 110 supporting a virtual machine (VM1, VM2) 120, an interface 150 configured for communication between the processor core 110 and a memory 160, a resource domain controller (RDC) 130 configured to control access to the memory 160, and a secure enclave 140. The resource domain controller (RDC) 130 is configured by the secure enclave 140.

The secure enclave 140 may be further configured to provide information identifying at least one memory region associated with the virtual machine 120 to the resource domain controller 130, the memory region being a memory region of the memory 160. The memory region may be allocated to the virtual machine 120 by the secure enclave 140.

The secure enclave 140 may be configured to obtain, from the at least one processor core 110, a virtual machine identifier (VMID1) for the virtual machine (VM1, VM2) 120.

The secure enclave 140 may be configured to assign a domain identifier DID to the processor core 110 supporting the virtual machine 120. The secure enclave 140 may provide the domain identifier DID of the processor core 110, together with an indication of a memory region allocated to the virtual machine 120, to the resource domain controller 130 for controlling access to the memory. The domain identifier DID may be based, in part, on a core identifier (CID) associated with the at least one processor core 110.

The interface 150 may be further configured for communication between the processor core 110 and a device 170 assigned to the virtual machine 120.

The secure enclave 140 may be further configured to assign a domain identifier (DID) to the device 170, and may provide the domain identifier (DID) of the device 170 to the resource domain controller 130 for controlling access by the device 170 to the memory 160.

The resource domain controller (RDC) 130 may be further configured to control access to the device 170. The secure enclave 140 may be configured to provide the domain identifier (DID) of the processor core 110, together with an indication of a memory block of the device 170, to the resource domain controller 130 for controlling access to the device 170.

The resource domain controller 130 may comprise at least one domain assignment controller (DAC) 132/132a/132b configured to append the domain identifier (DID) of the processor core 110 to an access request originating from the at least one processor core 110 and/or to append the domain identifier (DID) of the device 170 to an access request originating from the device 170.

The resource domain controller 130 may comprise a memory region checker (MRC) 136 configured to allow access to the memory 160, in response to an access request, based on a domain identifier (DID) and a memory region specified in the access request. The resource domain controller 130 may comprises a memory block checker (MBC) 134 configured to allow access to the device 170, in response to an access request, based on a domain identifier (DID) and a memory block specified in an access request.

The at least one processor core 110 may further comprise a hypervisor 118 for initialising and managing the virtual machine 120 on the processor core 110 and a BootROM extension 116. The BootROM extension 116 may be configured to redirect translation table setup for the virtual machine 120 from the hypervisor 118 to the BootROM extension 116 via a stub. The BootROM extension 116 may perform translation table setup in response to validation of the virtual machine identifier (VMID) and associated memory region details by the secure enclave 140.

The system 100 may comprises a System-on-Chip, SoC, wherein the system-on-chip comprises the at least one processor core 110 and the secure enclave 140.

The system may further comprise the memory 160 and/or the device 170.

Furthermore, a method has been disclosed, for controlling access to a memory 160 and/or a device 170 assigned to a virtual machine 120, wherein the virtual machine 120 is hosted by a system 100 comprising at least one processor core 110 supporting the virtual machine 120, a resource domain controller 130, a secure enclave 140, a memory 160 and a device 170. The method comprises: allocating, by the secure enclave 140, at least one memory region of the memory 160 to the virtual machine 120; assigning, by the secure enclave 140, a domain identifier (DID) to the processor core 110 and/or the device 170; and providing to the resource domain controller 130, by the secure enclave 140, the domain identifier (DID) and information identifying said at least one memory region allocated to the virtual machine 120. The method may further comprise configuring, by the resource domain controller 130, access to the memory 160 and/or the device 170 based on the domain identifier (DID).

The skilled person will understand from the foregoing description that the system and method of the present disclosure enable the system to be controlled and configured to provide secure/trusted DMA for the virtual machine 120. In particular, a trust relationship may be established via the secure enclave 140, which is the main trusted entity within the system 100. The secure enclave 140 communicates with the BootROM extension 116 on the core 110 to obtain the VMID information which is used for domain ID generation for transactions originating from the core cluster 110. Similarly, domain ID is also setup for device originating transactions. Device access requests and memory access requests are associated, by the resource domain controller 130, with a domain ID. The secure enclave 140 sets up the resource domain controller 130 to allow/deny transactions corresponding to the domain IDs, thereby retaining control over the RDC configuration.

It will be readily understood that the components of the embodiments as generally described herein and illustrated in the appended figures could be arranged and designed in a wide variety of different configurations. Thus, the foregoing detailed description of various embodiments, as represented in the figures, is not intended to limit the scope of the present disclosure, but is merely representative of various embodiments. While the various aspects of the embodiments are presented in drawings, the drawings are not necessarily drawn to scale.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

## Claims

**1.** A system comprising:
at least one processor core supporting a virtual machine;
an interface configured for communication between the processor core and a memory;
a resource domain controller, RDC, configured to control access to the memory; and
a secure enclave;
wherein the resource domain controller, RDC, is configured by the secure enclave.

**2.** The system of claim 1, wherein the secure enclave is configured to:
provide information identifying at least one memory region associated with the virtual machine to the resource domain controller, the memory region being a memory region of the memory.

**3.** The system of claim 2, wherein said memory region is allocated to the virtual machine by the secure enclave.

**4.** The system of any preceding claim, wherein the secure enclave is configured to:
assign a domain identifier to the processor core supporting the virtual machine.

**5.** The system of claim 4, wherein the secure enclave is configured to:
provide the domain identifier of the processor core, together with an indication of the memory region allocated to the virtual machine, to the resource domain controller for controlling access to the memory.

**6.** The system of any preceding claim,
wherein the interface is further configured for communication between the processor core and a device assigned to the virtual machine.

**7.** The system of claim 6, wherein the secure enclave is further configured to:
assign a domain identifier to the device; and
provide the domain identifier of the device to the resource domain controller for controlling access from the device to the memory.

**8.** The system of claim 6 or claim 7, wherein:
the resource domain controller, RDC, is further configured to control access to the device; and
wherein the secure enclave is configured to provide the domain identifier of the processor core, together with an indication of a memory block of the device, to the resource domain controller for controlling access to the device.

**9.** The system of any one of claims 4 to 8, wherein the resource domain controller comprises at least one domain assignment controller configured to append the domain identifier of the processor core to an access request originating from the at least one processor core and/or to append the domain identifier of the device to an access request originating from the device.

**10.** The system of any one of claims 4 to 9, wherein the resource domain controller comprises:
a memory region checker, MRC, configured to allow access to the memory, in response to an access request, based on a domain identifier and a memory region specified in the access request; and/or
a memory block checker, MBC, configured to allow access to the device, in response to an access request, based on a domain identifier and a memory block specified in an access request.

**10.** The system of any preceding claim, wherein the at least one processor core further comprises:
a hypervisor for initialising and managing the virtual machine on the processor core; and
a BootROM extension;
wherein the BootROM extension is configured to redirect translation table setup for the virtual machine from the hypervisor to the BootROM extension via a stub.

**12.** The system of claim 11, wherein the BootROM extension performs translation table setup in response to validation of the virtual machine identifier and associated memory region details by the secure enclave.

**13.** The system of any preceding claim, wherein the system comprises a System-on-Chip, SoC, wherein the system-on-chip comprises the at least one processor core and the secure enclave.

**14.** The system of any preceding claim, further comprising the memory and/or the device.

**15.** A method for controlling access to a memory and/or a device assigned to a virtual machine, wherein the virtual machine is hosted by a system comprising at least one processor core supporting the virtual machine, a resource domain controller, a secure enclave, a memory and a device; the method comprising:
allocating, by the secure enclave, at least one memory region of the memory to the virtual machine;
assigning, by the secure enclave, a domain identifier to the virtual machine and/or the device; and
providing to the resource domain controller, by the secure enclave, the domain identifier and information identifying said at least one memory region allocated to the virtual machine;
wherein the resource domain controller is configured to control access to the memory and/or the device based on the domain identifier.
